# EUROPÄISCHE PATENTSCHRIFT

(11) **EP 1 195 879 B1**
(45) Veröffentlichungstag und Bekanntmachung des Hinweises auf die Patenterteilung: **23.11.2005**
(21) Anmeldenummer: 01123045.5
(22) Anmeldetag: 26.09.2001
(51) Int. Cl.: H02K 11/00

(54) **Induktionsvorrichtung mit Dämpfungseinrichtung**
Magnetic field induction device with surge suppressor
Dispositif d'induction d'un champ magnétique avec suppresseur de surtension

(30) Priorität: 09.10.2000 DE 10049817
(43) Veröffentlichungstag der Anmeldung: 10.04.2002
(73) Patentinhaber: SIEMENS AKTIENGESELLSCHAFT, 80333 München (DE)
(72) Erfinder: Hamann, Jens, Dr., 90765 Fürth (DE); Segger, Bernd, 91052 Erlangen (DE)

(56) Entgegenhaltungen:
- EP-A- 0 117 764
- EP-A- 0 681 361
- EP-A- 0 748 025
- WO-A-97/45926
- DE-A- 2 433 618
- DE-A- 3 826 282
- DE-B- 2 834 378
- US-A- 6 081 080
- PATENT ABSTRACTS OF JAPAN vol. 003, no. 092 (E-128), 4. August 1979 (1979-08-04) & JP 54 069701 A (HITACHI LTD), 5. Juni 1979 (1979-06-05)
- PATENT ABSTRACTS OF JAPAN vol. 1998, no. 14, 31. Dezember 1998 (1998-12-31) & JP 10 257707 A (MITSUBISHI ELECTRIC CORP), 25. September 1998 (1998-09-25)

## Beschreibung

Die vorliegende Erfindung betrifft eine Induktionsvorrichtung zur Induktion eines Magnetfeldes in einem magnetisierbaren Kern und insbesondere Polspulwicklungen für elektrische Maschinen. Darüber hinaus betrifft die vorliegende Erfindung Induktionsanordnungen mit mehreren entsprechenden Induktionsvorrichtungen und ein korrespondierendes Verfahren zum Betreiben von elektrischen Maschinen.

Elektrische Maschinen, insbesondere Synchronmotoren, sind vielfach so aufgebaut, dass in Läufer- oder Ständernuten speziell geformte Wicklungsdrähte eingebracht werden. Die Wicklungsdrähte werden am Wickelkopf zu Wicklungssträngen verschaltet. Je nach Polzahl umfasst ein Wicklungsstrang mehrere Spulen. Bei Drehstrommaschinen wird pro Phase mindestens ein Wicklungsstrang eingerichtet, und diese Wicklungsstränge werden in je einem Sternpunkt verschaltet. Somit werden beispielsweise bei einem dreiphasigen Synchronmotor mit vier Polen im Sternpunkt drei Wicklungsstränge mit jeweils vier Spulen verschaltet. Die Eingangsspannungen des dreiphasigen Drehstroms liegen an den dem Sternpunkt gegenüberliegenden Außenklemmen der jeweiligen Wicklungsstränge an.

Bei Linearmotoren und immer mehr auch bei Synchronmotoren, von denen ein hohes Drehmoment gefordert wird, werden die Wicklungen in Polspultechnik ausgeführt. Das bedeutet, dass die aus Elektroblechen bestehenden Magnetkerne Zähne aufweisen, die als Polkern dienen. Auf die einzelnen Polkerne werden vorgefertigte Spulen aufgesetzt und entsprechend verschaltet. Die vorgefertigten Spulen bestehen aus einem Träger bzw. Spulenkörper, der aus einem elektrisch isolierenden Material besteht, und den darauf in der Regel maschinell aufgewickelten, isolierten Kupferdrähten. Gegebenenfalls kann der Träger nach dem Aufwickeln wieder entfernt werden, wenn der Wicklungskörper genügend Eigenstabilität besitzt.

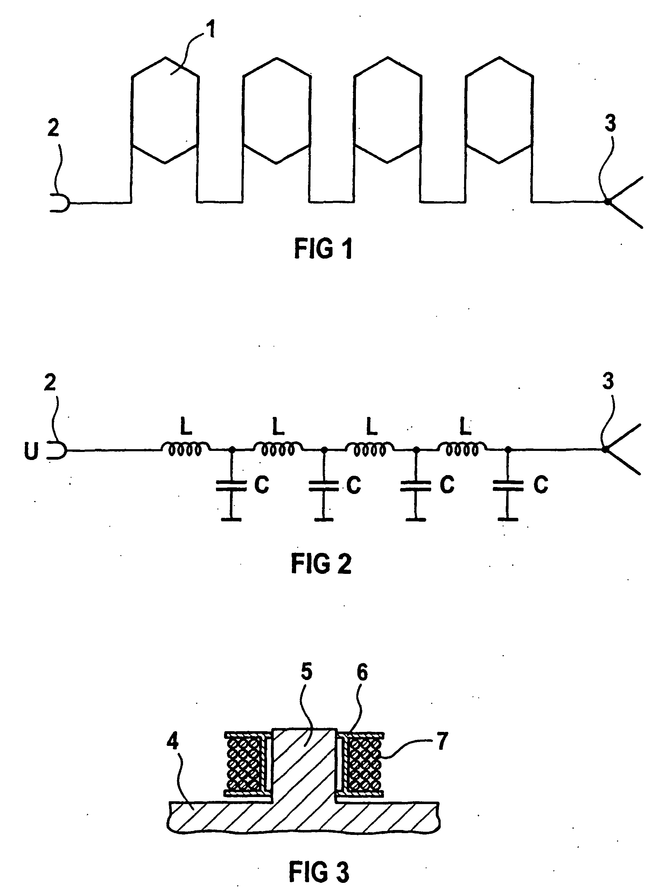

FIG 1 zeigt ein Schaltungsdiagramm eines typischen Wicklungsstrangs einer Drehstrommaschine, wobei die vier Spulen 1 in Polspultechnik ausgeführt sind. Die sechseckig dargestellten Polspulen 1 sind in Reihe geschaltet und werden über eine Eingangsklemme 2 elektrisch angesteuert. Das der Klemme 2 gegenüberliegende Ende des Wicklungsstrangs mündet in einen Sternpunkt 3. In diesem Sternpunkt 3 sind, wie bereits erwähnt, die weiteren Wicklungsstränge verbunden.

Das asymmetrische Ersatzschaltbild der in FIG 1 dargestellten elektrischen Schaltung ist in FIG 2 wiedergegeben. Die Induktivität einer jeden Spule 1 ist mit L bezeichnet. Die einzelnen Induktivitäten sind, wie aus FIG 1 ersichtlich ist, in Reihe geschaltet. Jede Spule 1 besitzt eine kapazitive Kopplung zu dem Polkern, auf dem sie angebracht ist. Die jeweiligen Kapazitäten C sind in FIG 2 als Ableitkapazitäten C gegenüber Masse dargestellt. Die Masse wird vom magnetischen Kern gebildet. An der Eingangsklemme 2 wird schließlich die Spannung U eingespeist.

Der tatsächliche Aufbau eines magnetischen Pols mit Polspulwicklung ist in FIG 3 dargestellt. Ein Magnetkern 4 umfasst einen Zahn bzw. Polkern 5. Auf dem Polkern 5 sitzt ein Spulenkörper 6. Der Spulenkörper 6 beinhaltet die Wicklung 7, welche bei der Polspultechnik Lage für Lage auf den Spulenkörper 6 gewickelt ist. Der Spulenkörper 6 dient zur Isolation zwischen der Wicklung 7 und dem aus Elektroblech bestehenden Polkern 5. Die Isolation ist so auszulegen, dass zwischen beiden Komponenten kein Durchschlag erfolgen kann.

Zur Ansteuerung von Synchronmotoren und insbesondere von Synchronlinearmotoren werden vielfach Umrichter eingesetzt. Üblicherweise erzeugen die Umrichter rechteckförmige Ansteuerspannungen.

Insbesondere bei größeren Ausbaugraden der Umrichter kann es zu Durchschlägen am Sternpunkt der mit Polspultechnik aufgebauten Drehstrommotoren kommen.

Zu ähnlichen Problemen kommt es auf dem Gebiet der elektrischen Maschinen immer wieder, wenn transiente Überspannungen auftreten. Daher werden die Überspannungen zur Vermeidung von Durchschlägen begrenzt. Beispielsweise wird gemäß der DE-A-38 26 282 ein spannungsabhängiger Metalloxid Widerstand einer Spule zur Überspannungsbegrenzung parallel geschaltet. In der DE-B-28 34 378 werden zur Querfelddämpfung Wicklungsabschnitte kurzgeschlossen. In ähnlicher Weise werden laut DE-A-24 33 618 bei einer Synchronmaschine transiente Überspannungen durch Querfelddämpferstäbe gedämpft.

Darüber hinaus wird in der EP-A-0 117 764 beschrieben, wie Überspannungen, die aufgrund von Resonanzphänomenen auftreten, durch ferroelektrische Isolatoren zwischen den Spulenwicklungen unterdrückt werden können. Schließlich wird in der EP-B-0 681 361 das Problem höherer harmonischer Schwingungen angesprochen, das bei Umrichtern und Gleichrichtern mit Leistungsthyristoren auftreten kann. Die Dämpferwicklung wird demzufolge mit Kondensatoren zu Resonanzkreisen verschaltet. Die Resonanzkreise besitzen eine Resonanzfrequenz, die 6n mal so hoch wie die Grundfrequenz der Synchronmaschine ist. Damit lassen sich höhere harmonische Schwingungen der Grundwelle absorbieren.

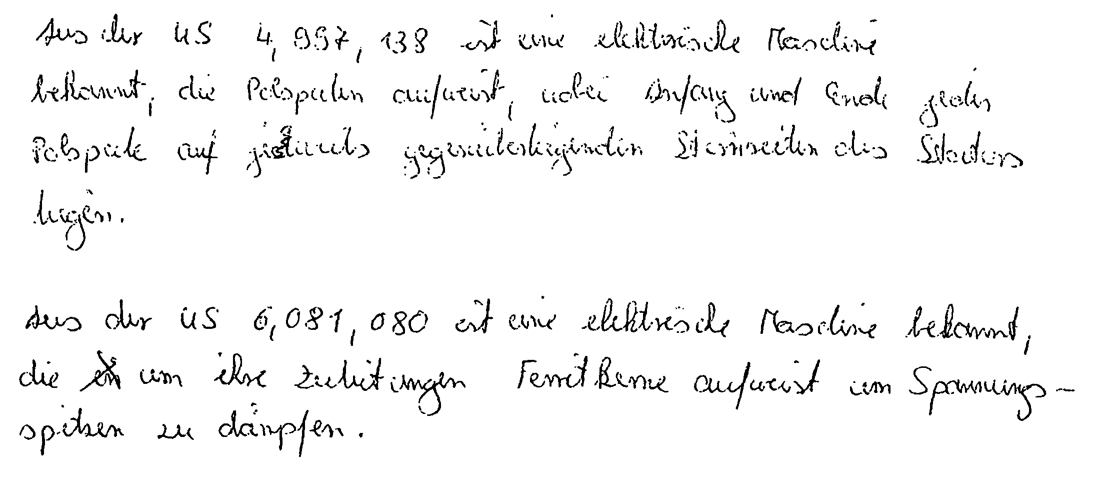

Das Problem der Durchschläge im Sternpunkt eines Synchronmotors, der mit Polspultechnik gefertigt ist, bleibt jedoch bestehen. Somit besteht die Aufgabe der vorliegenden Erfindung darin, Induktionsvorrichtungen und -anordnungen sowie ein Verfahren zum Betreiben elektrischer Maschinen vorzuschlagen, bei denen die Gefahr eines Durchschlags im Sternpunkt reduziert ist.

Erfindungsgemäß wird diese Aufgabe gelöst durch die Merkmale des Anspruchs 1.

Vorzugsweise besteht der verlustbehaftete Magnetkern aus einem ring- oder stabförmigen Magnetkern. Günstigerweise wird die magnetisierbare Einrichtung aus Ferrit gefertigt.

Die erfindungsgemäße Induktionsvorrichtung ist besonders wirkungsvoll bei Wicklungsanordnungen in Polspultechnik, wenn also die Wicklungen lagenförmig aufgebaut sind.

Die oben genannte Aufgabe wird ferner gelöst durch eine Induktionsvorrichtung mit einer Wicklungsanordnung zur Induktion eines Magnetfelds in einem magnetisierbaren Kern, wobei eine Abschirmeinrichtung vorgesehen ist, die derart an der Wicklungsanordnung angebracht ist, dass sie in einem Zustand, in dem die Induktionsvorrichtung auf oder an den magnetisierbaren Kern montiert ist, zwischen der Wicklungsanordnung und dem magnetisierbaren Kern angeordnet ist, wobei die Abschirmeinrichtung über einen elektrischen Widerstand an den magnetisierbaren Kern anschließbar ist. Vorzugsweise umfasst die Abschirmeinrichtung eine elektrisch leitende Abschirmfolie, die, wenn die Wicklungsanordnung in Polspultechnik ausgeführt ist, die gesamte Innenfläche oder nur Teile der Innenfläche der Wicklungsanordnung bedeckt.

Die oben dargestellte Aufgabe wird ferner durch ein Verfahren zum Betreiben einer elektrischen Maschine, die mindestens eine Wicklungsanordnung und einen Magnetkern aufweist, mit den Schritten nach Anspruch 12 gelöst.

Allgemein liegt der Erfindung die Erkenntnis zu Grunde, dass eine Polspulwicklung gegenüber dem als elektrische Masse zu betrachtenden Polkern einen L-C-Schwingkreis darstellt. Werden mehrere Polspulen in einem Wicklungsstrang in Reihe geschaltet entspricht dies einer in FIG 2 dargestellten Kettenleiterschaltung aus parasitären Elementen. Diese parasitären Elemente bestehen aus Induktivitäten und Ableitkapazitäten der Polspulen. Prinzipiell stellt diese Kettenleiterschaltung eine ungedämpfte Resonanzschaltung dar. Wird diese Resonanzschaltung neben der natürlichen Dämpfung nicht zusätzlich gedämpft, kommt es bei Einspeisung der Resonanzfrequenz ohne weiteres zu Spannungsüberhöhungen, um beispielsweise den Faktor 4. Daraus können Durchschläge am Sternpunkt 3 resultieren.

Das Einspeisen von Spannungsanteilen mit Frequenzen im Bereich der Resonanzfrequenz der Polspulen kann nicht immer verhindert werden. Vor allem bei der Ansteuerung von Synchronmotoren durch Umrichter werden in der Regel auch Frequenzen in der Nähe der spezifischen Resonanzfrequenzen der jeweils verwendeten Wicklungsstränge eingespeist. Probleme treten üblicher Weise aber erst dann auf, wenn der Spektralanteil der eingespeisten Störspannung im Bereich dieser Resonanzfrequenz verhältnismäßig hoch ist. Dies äußert sich beispielsweise dadurch, dass die vom Umrichter stammende Störspannung der Rechteckspannung überlagert ist, so dass an den Flanken der Rechteckspannung ein deutliches Überschwingen mit der Resonanzfrequenz erkennbar ist. Die Resonanzverstärkung dieser Überschwingungen durch die Kettenleiterschaltung des Wicklungsstrangs führt dann zu ausgeprägten Spannungsüberhöhungen und ggf. zu Durchschlägen im Sternpunkt 3.

Das Einspeisen von Spannungsanteilen mit Frequenzen im Bereich der Resonanzfrequenz der Polspulen kann nicht immer verhindert werden. Vor allem bei der Ansteuerung von Synchronmotoren durch Umrichter werden in der Regel auch Frequenzen in der Nähe der spezifischen Resonanzfrequenzen der jeweils verwendeten Wicklungsstränge eingespeist. Probleme treten üblicher Weise aber erst dann auf, wenn der Spektralanteil der eingespeisten Störspannung im Bereich dieser Resonanzfrequenz verhältnismäßig hoch ist. Dies äußert sich beispielsweise dadurch, dass die vom Umrichter stammende Störspannung der Rechteckspannung überlagert ist, so dass an den Flanken der Rechteckspannung ein deutliches Überschwingen mit der Resonanzfrequenz erkennbar ist. Die Resonanzverstärkung dieser Überschwingungen durch die Kettenleiterschaltung des Wicklungsstrangs führt dann zu ausgeprägten Spannungsüberhöhungen und ggf. zu Durchschlägen im Sternpunkt 3.

Die erfindungsgemäße Lösung setzt nun daran an, die Resonanzverstärkung gezielt zu dämpfen. Hierzu besteht die Möglichkeit, den kapazitiven Ableitstrom zwischen der Polspule und dem Polkern zu dämpfen. Eine Realisierungsvariante besteht darin, durch den kapazitiven Ableitstrom der Spule in einem verlustbehafteten Magnetkern eine magnetische Durchflutung hervorzurufen. Die Verluste im Magnetkern sorgen dann für eine entsprechende Dämpfung des kapazitiven Ableitstroms und damit der Schwingung im Kettenleiter.

Eine weitere Realisierungsmöglichkeit zur Dämpfung des kapazitiven Ableitstroms besteht darin, den Ableitstrom über einen ohmschen Widerstand abzugreifen.

Anhand der beigefügten Zeichnungen wird die vorliegende Erfindung näher erläutert. In ihnen zeigen:
- FIG 1: ein elektrisches Schaltungsdiagramm eines Wicklungsstrangs nach dem Stand der Technik;
- FIG 2: ein elektrisches Ersatzschaltbild zu dem Schaltungsdiagramm von FIG 1;
- FIG 3: eine Querschnittsansicht einer Polspulwicklung nach dem Stand der Technik;
- FIG 4: ein Schaltungsdiagramm einer erfindungsgemäßen Ausführungsform; und
- FIG 5: eine Querschnittsansicht einer weiteren Ausführungsform der vorliegenden Erfindung.

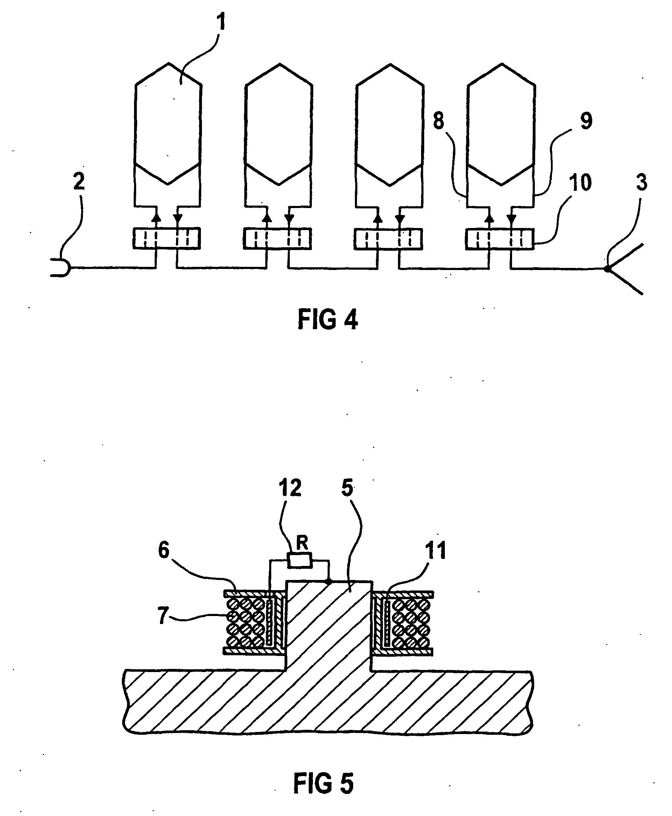

Die vorliegende Erfindung wird im folgenden anhand von zwei Ausführungsformen im Zusammenhang mit den FIG 4 und 5 näher erläutert.

FIG 4 zeigt ein elektrisches Schaltungsdiagramm eines erfindungsgemäß ausgestalteten Wicklungsstrangs mit Polspulen 1. Die Polspulen 1 eines Wicklungsstrangs beispielsweise für eine Phase eines Synchronmotors sind zwischen einer Einspeisklemme 2 und einem Sternpunkt 3 in Reihe geschaltet. Der Wicklungsanfang 8 und das Wicklungsende 9 jeder Polspule 1 sind jeweils durch einen verlustbehafteten, ringförmigen Magnetkern 10 geführt. Zur besseren Wirksamkeit können beide Wicklungsenden der Polspule auch auf den verlustbehafteten Magnetkern gewickelt werden.

Der Betriebsstrom durchläuft bzw. umläuft den verlustbehafteten Magnetkern beim Ein- und Austritt in bzw. aus der Spule in entgegengesetzten Richtungen. Folglich erregt dieser Betriebsstrom in dem Magnetkern im wesentlichen kein Magnetfeld. Dagegen wird der kapazitive Ableitstrom über den verlustbehafteten Magnetkern 10 in die Polspule 1 geführt, aber beim Austritt von der Spule in den Polkern wird der kapazitive Ableitstrom nicht mehr über den verlustbehafteten Magnetkern geleitet. Folglich erregt der kapazitive Ableitstrom der Spule sehr wohl ein Magnetfeld in dem verlustbehafteten Magnetkern 10. Die Verluste im Magnetkern 10 dämpfen den Ableitstrom und damit die Schwingung im Kettenleiter. Infolgedessen treten auch geringere Spannungsüberhöhungen am Sternpunkt 3 auf, so dass Durchschläge an dieser Stelle, die die Hauptisolation des Motors beschädigen, weniger häufig auftreten.

Die Gestalt des verlustbehafteten Magnetkerns 10 ist vorzugsweise ringförmig. Der verlustbehaftete Magnetkern 10 kann aber auch beispielsweise stabförmig ausgestaltet sein.

Die Verluste im Magnetkern 10 können sich ergeben z.B. aus Ummagnetisierungs-, Hysterese- und/oder Wirbelstromverlusten. Günstigerweise wird ein Ferritkern verwendet, dessen Verluste im höherfrequenten Bereich steigen.

Eine weitere Ausführungsform der vorliegenden Erfindung ist in FIG 5 dargestellt. Aus dem in der Regel aus Elektroblechen geformten Polkern 5 ist ein Spulenkörper 6 mit Wicklungen 7 aufgebracht. Auf dem Boden des Spulenkörpers 6 ist eine isolierte Abschirmfolie 11 angeordnet. Vorzugsweise umläuft die Abschirmfolie 11 den Spulenkörper 6 unter der Spulenwicklung 7 vollständig. Über einen Ableitwiderstand ist die Abschirmfolie 11 beispielsweise mit dem Ständerpolkern 5 des Motors verbunden. Die Verbindung zwischen der Abschirmfolie 11 und dem Ableitwiderstand 12 kann ggf. durch den Spulenkörper 6 führen. Durch den ohmschen Widerstand 12 wird der kapazitive Ableitstrom der Polspule gedämpft. Daraus resultiert wiederum eine verringerte Resonanzverstärkung und Spannungsüberhöhung und letztlich eine geringere Durchschlagshäufigkeit.

Die Abschirmfolie besteht aus gut leitendem Metall, vorzugsweise aus Aluminium, bzw. einer entsprechend metallisierten Folie.

Wenn die Polspule auf den Polkern 5 montiert ist, befindet sich die Abschirmfolie 11 und der Boden des Spulenkörpers 6 zwischen der Windung 7 und dem Polkern 5. Elektrisch bedeutet dies, dass zwischen der untersten Wicklungslage der Spulenwicklung 7 und der Abschirmfolie 11 eine erste Kapazität und zwischen der Abschirmfolie 11 und dem Polkern 5 eine zweite Kapazität aufgebaut ist. Damit es nicht zu Durchschlägen von der Wicklung zur Abschirmfolie 11 kommt, sind die Isolationsmaterialien der Spulenwicklung 7, der Abschirmfolie 11 und des Spulenkörpers 6 so auszuwählen, dass die erste Kapazität zwischen der Wicklung 7 und der Abschirmfolie 11 wesentlich größer ist als die zweite Kapazität zwischen der Abschirmfolie 11 und dem Polkern 5. Ferner ist der Ableitwiderstand 12 im Hinblick auf die zu dämpfenden Frequenzen an die erste und zweite Kapazität anzupassen. Die in FIG 5 dargestellte zweite Ausführungsform der vorliegenden Erfindung lässt sich selbstverständlich auch auf eine wie in FIG 4 gezeigte Induktionsanordnung aus mehreren Induktionsvorrichtungen anwenden. Die erfindungsgemäße Induktionsanordnung für den jeweiligen Wicklungsstrang sorgt wiederum dafür, dass im Sternpunkt 3 weniger häufig Durchschläge erfolgen und die Hauptisolation des Motors beschädigt wird.

Die beiden oben dargestellten Ausführungsformen der vorliegenden Erfindung gemäß den FIG 4 und 5 gewährleisten also bei einem Betreiben einer elektrischen Maschine das Dämpfen eines kapazitiven Ableitstroms zwischen mindestens einer Polspule und dem Magnetkern im einen Fall durch ein verlustbehaftetes kapazitives und im anderen Fall durch ein verlustbehaftetes induktives Bauelement. Kombinationen beider Dämpfungsvarianten sind selbstverständlich möglich.

## Patentansprüche

1. Induktionsvorrichtung mit einer Wicklungsanordnung (1), die einen Wicklungsanfang (8) und ein Wicklungsende (9) auf weist, zur Induktion eines Magnetfeldes in einem magnetisierbaren Kern, **gekennzeichnet durch** einen verlustbehafteten Magnetkern (10) **durch** und/oder um die der Wicklungsanfang (8) und das Wicklungsende (9) der Wicklungsanordnung (1) derart angeordnet ist, dass in dem Magnetkern (10) ein magnetischer Fluss erregbar ist, wobei die Wicklungsanordnung (1) Polspulen aufweist, wobei zur Dämpfung eines kapazitiven Ableitstromes der Wicklungsanfang (8) und das Wicklungsende (9) jeder Polspule (1) jeweils **durch** einen verlustbehafteten Magnetkern (10) geführt ist, wobei der Betriebsstrom den verlustbehafteten Magnetkern (10) beim Ein- und Austritt aus der Polspule (1) in entgegangesetzter Richtung durchläuft und dabei in dem Magnetkern (10) im wesentlichen kein Magnetfeld erzeugt.

2. Induktionsvorrichtung nach Anspruch 1, wobei der verlustbehaftete Magnetkern (10) einen ring- oder stabförmigen Magnetkern umfasst.

3. Induktionsvorrichtung nach Anspruch 1 oder 2, wobei der verlustbehaftete Magnetkern (10) zumindest telweise aus Ferrit gefertigt ist.

4. Induktionsvorrichtung nach einem der Ansprüche 1 bis 3, wobei die Induktionsvorrichtung in einer elektrischen Maschine eingesetzt ist.

5. Induktionsvorrichtung mit einer Wicklungsanordnung (1, 7) zur Induktion eines Magnetfelds in einem magnetisierbaren Kern (5), **gekennzeichnet durch** eine Abschirmeinrichtung (11), die derart in oder an der Wicklungsanordnung (1,7) angebracht ist, dass sie in einem Zustand, in dem die Induktionsvorrichtung auf oder an den magnetisierbaren Kern (5) montiert ist, zwischen der Wicklungsanordnung und dem magnetisierbaren Kern angeordnet ist, wobei die Abschirmeinrichtung (11) über einen elektrischen Widerstand (12) an den magnetisierbaren Kern (5) anschließbar ist.

6. Induktionsvorrichtung nach Anspruch 5, wobei die Abschirmeinrichtung (11) eine elektrisch leitende Abschirmfolie umfasst.

7. Induktionsvorrichtung nach Anspruch 5 oder 6, wobei die Wicklungsanordnung (1,7) in Polspultechnik ausgeführt ist.

8. Induktionsvorrichtung nach Anspruch 5, 6 oder 7, wobei die Wicklungsanordnung (1,7) von einem elektrisch isolierenden Spulenträger (6) zumindest teilweise so umgeben ist, dass die Abschirmeinrichtung (11) zwischen der Wicklungsanordnung (1,7) und dem isolierenden Spulenträger (6) angeordnet ist.

9. Induktionsvorrichtung nach Anspruch 7 oder 8, wobei die Wicklungsanordnung (7) einen Ringkörper bildet, und die Abschirmeinrichtung (11) die gesamte Innenfläche oder nur Teile der Innenfläche des Ringkörpers bedeckt.

10. Induktionsanordnung, bei der zwei oder mehr Induktionsvorrichtungen nach einem der Ansprüche 1 bis 9 an den jeweiligen Wicklungsanfängen und -enden der Wicklungsanordnungen (1, 7) zu einem Wicklungsstrang in Reihe geschaltet sind.

11. Induktionsanordnung nach Anspruch 10, wobei zwei oder mehr Wicklungsstränge in einem Sternpunkt (3) verschaltet sind.

12. Verfahren zum Betreiben einer elektrischen Maschine, die mindestens eine Wicklungsanordnung (1, 7) und einen Polkern (5) aufweist, mit den Schritte:
- Ansteuern der mindestens eine Wicklungsanordnung (1, 7) durch eine Steuerspannung bzw. einen Steuerstrom und
- im Wesentlichen ausschließliches Dämpfen eines kapazitiven Ableitstromes zwischen der mindestens einen Wicklungsanordnung (1, 7) und dem Polkern (5) durch ein verlustbehaftetes induktives Bauelement (10),
- Führen des Betriebsstromes durch bzw. um das verlustbehaftete induktive Bauelement bein Ein- und Austritt in bzw. aus der Polspule in entgegengesetzten Richtungen, so dass im wesentlichen kein Magnetfeld erregt wird, so dass der kapazitive Ableitstrom über das verlustbehaftete Bauelement in die Polspule (1) geführt wird und in dem verlustbehafteten Bauelement ein Magnetfeld erzeugt, das den Ableitstrom dämpft.

13. Induktionsvorrichtung nach einem der Ansprüch 5 bis 11, wobei die Induktionsvorrichtung in einer elektrischen Maschine eingesetzt ist.

## Claims

1. Induction apparatus with a winding arrangement (1) having a winding start (8) and a winding end (9) for inducing a magnetic field in a magnetisable core, **characterised by** a lossy magnetic core (10) through and/or around the winding start (8) and the winding end (9) of the winding arrangement (1) being arranged such that a magnetic flow can be activated in the magnetic core (10), in which the winding arrangement (1) has exciter coils, in which each exciter coil (1) is fed respectively through a lossy magnetic core (10) in order to dampen a capacitative bypass current of the winding start (8) and the winding end (9), with which the operating current flows through the lossy magnetic core (10) in the opposite direction when entering and leaving the exciter coil (1) and thus essentially generates no magnetic field in the magnetic core (10),

2. Induction device according to claim 1, with which the lossy magnetic core (10) comprises a ring-shaped magnetic core or a rod-shaped magnetic core.

3. Induction device according to claims 1 or 2, with which the lossy magnetic core (10) is at least partially manufactured from ferrite.

4. Induction device according to one of claims 1 to 3, in which the induction device is used in an electrical machine.

5. Induction device having a winding arrangement (1, 7) for inducing a magnetic field in a magnetisable core (5), **characterised by** a shielding foil (11) which is applied to or into the winding arrangement (1, 7) such that it is arranged in between the winding arrangement and the magnetisable core, in a state in which the induction device is mounted on or to the magnetic core (5), in which the shielding foil (11) can be connected to the magnetisable core (5) by means of an electrical resistance (12).

6. Induction device according to claim 5, in which the shielding device (11) comprises an electrically conductive shielding foil.

7. Induction device according to claim 5 or 6, in which the winding arrangement (1, 7) is implemented in coiling techniques.

8. Induction device according to claim 5, 6 or 7, in which the winding arrangement (1, 7) is at least partially surrounded by an electrically insulating coil body (6) such that the shielding device (11) is arranged between the winding arrangement (1, 7) and the insulating coil body (6).

9. Induction device according to claim 7 or 8, in which the winding arrangement (7) forms a ring body, and the shielding device (11) covers the entire interior surface or only a part of the interior surface of the ring body.

10. Induction arrangement in which two or more induction devices according to one of claims 1 to 9 are connected in series at the respective winding starts and ends of the winding arrangement (1, 7) to a winding strand.

11. Induction arrangement according to claim 10, in which two or more winding strands are interconnected in a star point (3).

12. Method for operating an electrical machine, which has at least one winding arrangement (1, 7) and one pole core (5), with the steps:
- controlling the at least one winding arrangement (1,7) through a control voltage and/or a control current and
- essentially exclusively damping a capacitative bypass current between the at least one winding arrangement (1,7) and the pole core (5) through a lossy inductive core (10),
- guiding the operating current through and/or around the lossy inductive core during the whilst entering and leaving in or out of the pole coil in the opposite direction, so that no magnetic field is essentially generated, so that the capacitative bypass current is fed over the lossy component in the pole coil (1) and a magnetic field is generated in the lossy component, that dampens the bypass current.

13. Induction device according to one of the claims 5 to 11, in which the induction device is used in an electrical machine.

## Revendications

1. Dispositif d'induction comprenant un agencement (1) d'enroulement, qui a un commencement (8) de l'enroulement et une fin (9) de l'enroulement, pour l'induction d'un champ magnétique dans un noyau pouvant être aimanté, **caractérisé**
**par** un noyau (10) d'aimant ayant des pertes par lequel et/ou autour duquel le commencement (8) de l'enroulement et la fin (9) de l'enroulement de l'agencement (1) d'enroulement est disposé de manière à pouvoir exciter dans le noyau (10) magnétique un flux magnétique, l'agencement (1) de l'enroulement ayant des bobines inductrices, dans lequel, pour l'atténuation d'un courant de décharge capacitif, le commencement (8) de l'enroulement et la fin (9) de l'enroulement de chaque bobine (1) inductrice est guidé respectivement par un noyau (10) magnétique ayant des pertes, le courant de fonctionnement du noyau (10) magnétique ayant des pertes passant à l'entrée et à la sortie de la bobine (1) inductrice en sens opposés et ne produisant ainsi dans le noyau (10) magnétique sensiblement pas de champ magnétique.

2. Dispositif d'induction suivant la revendication 1, dans lequel le noyau (10) magnétique ayant des pertes comprend un noyau magnétique en forme d'anneau ou en forme de barreau.

3. Dispositif d'induction suivant la revendication 1 ou 2, dans lequel le noyau (10) magnétique ayant des pertes est au moins en partie en ferrite.

4. Dispositif d'induction suivant l'une des revendications 1 à 3, **caractérisé en ce que** le dispositif d'induction est utilisé dans une machine électrique.

5. Dispositif d'induction ayant un agencement (1, 7) d'enroulement pour l'induction d'un champ magnétique dans un noyau (5) pouvant être aimanté, **caractérisé par** un dispositif (11) de blindage, qui est mis dans ou sur l'agencement (1, 7) d'enroulement, de façon à être disposé dans un état dans lequel le dispositif d'induction est monté sur ou contre le noyau (5) pouvant être aimanté entre l'agencement d'enroulement et le noyau pouvant être aimanté, le dispositif (11) de blindage pouvant être relié par une résistance (12) électrique au noyau (5) pouvant être aimanté.

6. Dispositif d'induction suivant la revendication 5, dans lequel le dispositif (11) de blindage comprend une feuille de blindage conductrice de l'électricité.

7. Dispositif d'induction suivant la revendication 5 ou 6, dans lequel l'agencement (1, 7) d'enroulement est réalisé suivant la technique en bobine inductrice.

8. Dispositif d'induction suivant la revendication 5, 6 ou 7, dans lequel l'agencement (1, 7) d'enroulement est entouré au moins en partie d'un porte-bobine (6) isolant électriquement, de sorte que le dispositif (11) de blindage est disposé entre l'agencement (1, 7) d'enroulement et le porte-bobine (6) isolant.

9. Dispositif d'induction suivant la revendication 7 ou 8, dans lequel l'agencement (7) d'enroulement forme une pièce annulaire et le dispositif (11) de blindage recouvre toute la surface intérieure ou seulement des parties de la surface intérieure de la pièce annulaire.

10. Agencement d'induction, dans lequel deux ou plusieurs dispositifs d'induction suivant l'une des revendications 1 à 9 sont montés en série en un brin d'enroulement sur les commencements et les extrémités d'enroulement respectifs des agencements (1, 7) d'enroulement.

11. Agencement d'induction suivant la revendication 10, dans lequel deux ou plusieurs brins d'enroulement sont connectés en un point (3) neutre.

12. Procédé pour faire fonctionner une machine électrique qui a au moins un agencement (1, 7) d'enroulement et un noyau (5) polaire, comprenant les stades dans lesquels :
- on commande le au moins un agencement (1, 7) d'enroulement par une tension de commande ou par un courant de commande et
- on atténue sensiblement exclusivement un courant de fuite capacitif entre le au moins un agencement (1, 7) d'enroulement et le noyau (5) polaire par un composant (10) inductif à perte,
- on fait passer le courant de fonctionnement dans ou autour du composant inductif à perte lors de l'entrée et la sortie dans ou hors de la bobine inductive, dans des sens opposés de manière à ne pas exciter sensiblement de champs magnétiques, de sorte que le courant de fuite capacitif passe par l'intermédiaire du composant à perte dans la bobine (1) inductive et produit dans le composant à perte un champ magnétique qui atténue le courant de fuite.

13. Dispositif d'induction suivant l'une des revendications 5 à 11, dans lequel le dispositif d'induction est utilisé dans une machine électrique.
